Europäisches Patentamt

European Patent Office

Office européen des brevets

(11) Veröffentlichungsnummer: **0 371 185**
**A2**

(12) **EUROPÄISCHE PATENTANMELDUNG**

(21) Anmeldenummer: 89101725.3

(22) Anmeldetag: 01.02.89

(51) Int. Cl.5: **H01B 7/22, H02G 9/02**

(30) Priorität: 23.11.88 DE 3839518

(43) Veröffentlichungstag der Anmeldung:
06.06.90 Patentblatt 90/23

(84) Benannte Vertragsstaaten:
**BE DE FR GB IT NL SE**

(71) Anmelder: **Siemens Aktiengesellschaft**
**Wittelsbacherplatz 2**
**D-8000 München 2(DE)**

(72) Erfinder: **Giebel, Wolfgang, Dipl.-Ing.**
**Bergmoserstrasse 5**
**D-8035 Gauting(DE)**
Erfinder: **Kunze, Dieter, Dipl.-Ing.**
**Rosenstrasse 10**
**D-8027 Neuried(DE)**

(54) **Kabel- und Zusatzbewehrung mit stromführenden Elementen für die elektrische Energieversorgung von Regeneratoren und dergleichen, sowie Verfahren zur Energieversorgung.**

(57) Die Erfindung betrifft ein Kabel (1) mit Zusatzbewehrung (2), in der längsverlaufende, zugfeste Elemente (9) eingelagert sind. Eine solche Kombination eignet sich zum Verlegen der Einheit in Gewässern. Für die Zuführung der elektrischen Energie zu den nicht bzw. schwer zugänglichen Regeneratoren (5) am Gewässergrund ist zumindest ein in der Zusatzbewehrung (2) eingelagertes, stromführendes Element (9, 10, 12) vorgesehen.

EP 0 371 185 A2

FIG 2

## Kabel- und Zusatzbewehrung mit stromführenden Elementen für die elektrische Energieversorgung von Regeneratoren und dergleichen, sowie Verfahren zur Energieversorgung.

Die Erfindung betrifft ein Kabel mit Zusatzbewehrung, insbesondere für den Einsatz in Gewässern, wobei in der Zusatzbewehrung in Längsrichtung zugfeste Elemente eingebettet sind und das Kabel innerhalb eines längsverlaufenden Aufnahmehohlraumes angeordnet ist.

Kabel mit Zusatzbewehrung der genannten Art sind bereits bekannt. Ebenso ist bekannt, daß in Gewässern versenkte Regeneratoren oder ähnliche Geräte mit elektrischer Energie durch Fernspeisung versorgt werden, die über separate elektrische Kabel bzw. Leitungen zugeführt wird. Dies erfordert jedoch zusätzlichen Aufwand bezüglich Material, Montage- bzw. Verlegearbeiten und auch zusätzlichen Schutz gegen Beschädigungen.

Für vorliegende Erfindung ergibt sich nun die Aufgabe, eine Energieversorgung für nicht oder nur sehr schwer zugängliche Geräte zu schaffen, die in einfacher Weise sicher und doch mit relativ geringem Aufwand vorgenommen werden kann. Die gestellte Aufgabe wird gemäß der Erfindung mit Hilfe eines Kabels und einer Zusatzbewehrung der eingangs erläuterten Art dadurch gelöst, daß zumindest ein stromführendes Versorgungselement für die elektrische Fernspreisung von Regeneratoren oder ähnlichen Geräten in der Zusatzbewehrung eingelagert ist.

Weiterhin ergibt sich als zweite Aufgabe, ein Verfahren zu entwickeln, das für die Zuführung der elektrischen Energie geeignet ist. Diese gestellte Aufgabe wird durch die Merkmale der Ansprüche 15 bis 17 gelöst.

Die Vorteile einer Energiefernversorgung gemäß der Erfindung für nicht oder schwer erreichbare Geräte sind nun besonders darin zu sehen, daß zumindest zum Teil vorhandene und nicht separate Elemente für die Übertragung der Energie ausgenützt werden und daß diese Versorgungselemente zugleich geschützt sind. Außerdem entfallen zusätzliche Montage- bzw. Verlegearbeiten. So werden für diese Versorgungselemente zum Beispiel bereits vorhandene zugfeste Elemente in der Zusatzbewehrung für die Energieübertragung verwendet. Eine weitere Möglichkeit bietet sich dadurch an, daß diese zugfesten Elemente teilweise verwendet oder durch elektrisch besser leitende Materialien ersetzt werden, wobei diese Versorgungselemente dann außerdem im Inneren der anderen zugfesten Elemente untergebracht und dadurch ebenso wie das in der Zusatzbewehrung eingefügte Kabel geschützt sind. Bei einer anderen Möglichkeit werden die Bewehrungselemente des eingefügten Kabels als energieübertragende Versorgungselemente umfunktioniert. All diese Energieversorgungselemente können sowohl bei Fernspeisung wie auch bei ortsgebundener, lokaler Energieversorgung verwendet werden.

Die Erfindung wird nun anhand von drei Figuren näher erläutert.

Figur 1 zeigt verschiedene Möglichkeiten zur Energieversorgung von Regeneratoren oder ähnlichen Geräten.

Figur 2 erläutert die Zuführung der Energie über die Zusatzbewehrung gemäß der Erfindung an einem ersten Ausführungsbeispiel.

Figur 3 erläutert die Zuführung der Energie über den Zusatz Bewehrung gemäß der Erfindung an einem zweiten Ausführungsbeispiel.

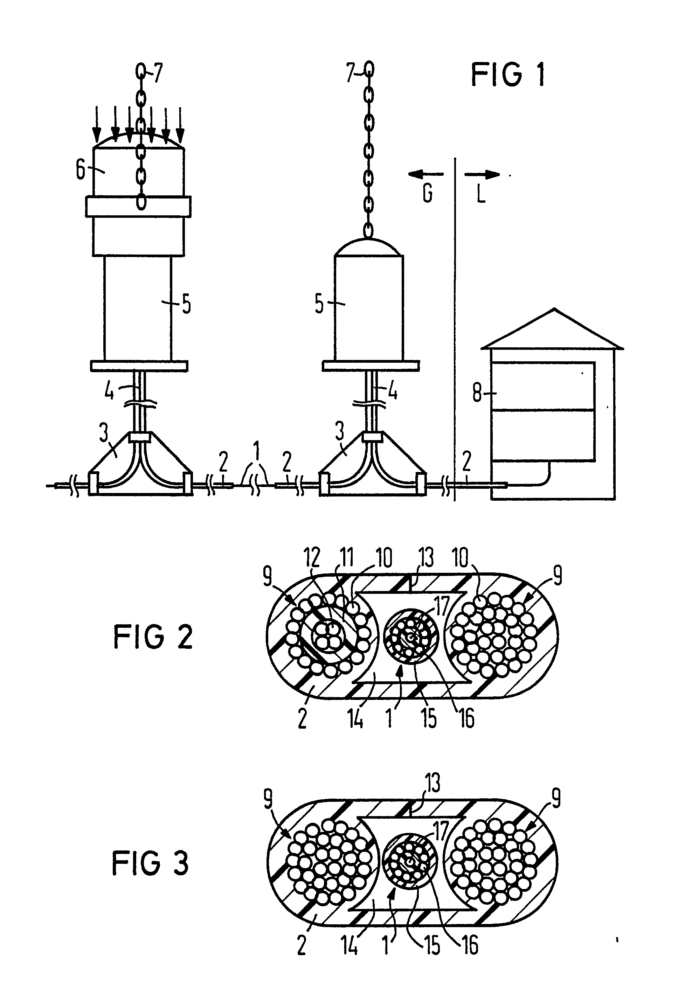

In Figur 1 wird das Prinzip für die Fernspeisung von Regeneratoren oder ähnlichen Geräten anhand von verschiedenen Möglichkeiten gezeigt, wobei die Versorgungselemente für die Energieversorgung jeweils gemäß der Erfindung über zumindest ein stromführendes Versorgungselement erfolgt, das in der Zusatzbewehrung 2 für das verlegte Kabel 1 eingelagert ist. Im einzelnen werden nun Verfahren gemäß der Erfindung erläutert, mit deren Hilfe die Energieversorgung erfolgen kann. So sind in dieser Figur Regeneratoren 5 gezeigt, die an Stichkabeln 4 der jeweiligen Abzweig-bzw. Verbindungsmuffe 3 angeschlossen sind. Die Länge T dieser Stichkabel 4 ist so groß bemessen, daß die Regeneratoren 5 zum Beispiel an Ketten 7 oder dergleichen im Bedarfsfall vom Boden des Gewässers G an die Oberfläche angehoben werden können. Im linken Regenerator 5 ist angedeutet, daß eine Energieversorgung auch mit Hilfe von lokalen Energieversorgungseinheiten 6, in denen die Erzeugung elektrischer Energie auf chemische Weise, zum Beispiel mit Wasserstoffbrennstoffzellen vorgenommen wird. Eine weitere Möglichkeit ist die Erzeugung von elektrischer Energie mit Hilfe von Fotozellen, wobei diese Einheiten dann innerhalb eines Turmes oder einer schwimmenden Boje nahe der Waseroberfläche untergebracht sind. Die Energieerzeugung für die Regeneratoren 5 kann jedoch auch mit Vorrichtungen erfolgen, die auf der Basis von Druckschwankungen bei Gezeitenhub oder von Wasserströmung beruhen. Die Weiterleitung und Fortführung der Energie wird in jedem Fall gemäß der Erfindung zumindest zum Teil über die Zusatzbewehrung vorgenommen. So ist auch gezeigt, daß die Energieversorgung von einem an Land L aufgestellten energieerzeugenden Gerät 8 erfolgen kann. Auch Nuklearzellen sind für die Energieerzeugung im Unterwasserbereich geeignet.

Die Figur 2 zeigt den Querschnitt einer Zusatzbewehrung 2 für ein zu schützendes Kabel 1, das in einem längsverlaufenden Aufnahmehohlraum 14 zwischen zwei eingelagerten längsverlaufenden zugfesten Elementen 9 eingebracht ist. Zum Einbringen des Kabels 1 in den Aufnahmehohlraum 14 ist ein längsverlaufender Schlitz 13 vorgesehen, der entweder bereits bei der Fertigung der Zusatzbewehrung 2 ausgebildet oder erst beim Einführvorgang für das Kabel 1 eingeschnitten wird. Die beiden seitlichen zugfesten Elemente 9 bestehen beispielsweise aus mehreren zug festen Einzelelementen 10, die zweckmäßigerweise miteinander verseilt sind. Bei diesem Ausführungsbeispiel ist nun in dem linken zugfesten Element 9 ein stromführendes Versorgungselement 12 eingearbeitet, das beispielsweise aus mehreren Drähten gebildet wird. Um dieses Versorgungselement 12 herum ist eine geeignete Isolierung 11 angebracht, wodurch dieses von den eigentlichen zugfesten Elementen 9 elektrisch isoliert geführt wird. Dieses Versorgungselement 12 dient nun als Zuführungsleitung für die benötigte elektrische Energie und wird nach einem der vorher beschriebenen Versorgungsprinzipien angeschlossen. Die Rückleitung der Energie erfolgt in diesem Beispiel über das zweite, das rechts gezeichnete zugfeste Element 9. Das zu schützende Kabel 1 besteht üblicherweise aus einem Kabelmantel 15 mit einer darunter liegenden Bewehrung 16. Im Inneren befinden sich dann die Übertragungselemente zum Beispiel Lichtwellenleiter 17. Ein solches Kabel 1 ist beispielsweise recht einfach im Aufbau und ist für universellen Einsatz gedacht. Für sich alleine ist es jedoch für Unterwassereinsatz nicht ausreichend geschützt, so daß man es in eine Zusatzbewehrung einfügt, wie die Figur zeigt. Beschädigungen werden somit durch die zugfesten Elemente 9 weitgehend unterbunden und auch das stromführende Versorgungselement 12 innerhalb des zugfesten Elementes 9 ist gut geschützt eingelagert; denn bei einer Beschädigung wird zunächst nur das Material der umhüllenden Zusatzbewehrung 2 verletzt und eine größere Beeinträchtigung kann sich nicht ergeben.

Bei einem zweiten Ausführungsbeispiel gemäß der Erfindung nach Figur 3 wird das Kabel 1 bzw. dessen unter dem Kabelmantel 15 liegende Bewehrung 16 mit gut leitendem und damit für die elektrische Energieversorgung geeigneten Elementen, zum Beispiel mit Kupferleitern, versehen. Dadurch ist es möglich, die benötigte elektrische Energie über das eigentliche Kabel 1 selbst den Generatoren zuzuführen. Als Rückleitungselemente können dann die zugfesten Elemente 9 der Zusatzbewehrung 2 herangezogen werden. Dieses Ausführungsbeispiel ist besonders günstig und einfach in der Herstellung. Die weitere Bauweise gleicht dem vorhergehenden Ausführungsbeispiel. Wenn das Kabel 1 von vornherein als Seekabel vorgesehen ist, kann es auch bereits werksseitig in die Zusatzbewehrung 2 eingearbeitet werden, so daß sich dann der längsverlaufende Schlitz 13 erübrigt.

Die verschiedenen Möglichkeiten zur elektrischen Energieversorgung der Regeneratoren mit Hilfe der stromführenden Elemente innerhalb der Zusatzbewehrung wie sie in den Figuren 2 und 3 gezeigt sind, wurden bereits oben beschrieben.

**Ansprüche**

1. Kabel mit Zusatzbewehrung, insbesondere für den Einsatz in Gewässern, wobei in der Zusatzbewehrung in Längsrichtung zugfeste Elemente eingebettet sind und das Kabel innerhalb eines längsverlaufenden Aufnahmehohlraumes angeordnet ist,
**dadurch gekennzeichnet,**
daß zumindest ein stromführendes Versorgungselement (9, 12) für die elektrische Fernspeisung von Regeneratoren (5) oder ähnlichen Geräten in der Zusatzbewehrung (2) eingelagert ist.

2. Kabel nach Anspruch 1,
**dadurch gekennzeichnet,**
daß das stromführende Versorgungselement (12) mit einer elektrischen Isolierung (11) versehen innerhalb eines zugfesten Elementes (9) geführt ist.

3. Kabel nach einem der vorhergehenden Ansprüche,
**dadurch gekennzeichnet,**
daß das stromführende Versorgungselement (10, 12) als Verseilelement im aus mehreren Einzelelementen bestehenden und verseilten zugfesten Element (9) angeordnet ist.

4. Kabel nach Anspruch 1,
**dadurch gekennzeichnet,**
daß das stromführende Versorgungselement als Teil der Bewehrung des zu schützenden Kabels (1) angeordnet ist.

5. Kabel nach einem der vorhergehenden Ansprüche, **dadurch gekennzeichnet,**
daß mindestens ein zugfestes Element (9) als Rückleiter für die Fernspeisung angeschlossen ist.

6. Kabel nach einem der vorhergehenden Ansprüche, **dadurch gekennzeichnet,**
daß das Kabel (1) im Aufnahmehohlraum (14) zwischen zwei seitlich davon verlaufenden zugfesten Elementen (2) innerhalb der Zusatzbewehrung (2) angeordnet ist.

7. Kabel nach einem der vorhergehenden Ansprüche,
**dadurch gekennzeichnet,**
daß der Aufnahmehohlraum (14) einen längsverlaufenden Schlitz (13) zum Einführen des Kabels (1) aufweist.

8. Kabel nach einem der vorhergehenden Ansprüche,

**dadurch gekennzeichnet,**
daß die Versorgungselemente (9, 10, 12, 16) der Fernspeisung landseitig an eine Energiequelle (8) angeschlossen sind.

9. Kabel nach einem der Ansprüche 1 bis 7,
**dadurch gekennzeichnet,**
daß die Versorgungselemente (9, 10, 12, 16) an lokalen Versorgungseinheiten (6) angeschlossen sind.

10. Kabel nach einem der vorhergehenden Ansprüche,
**dadurch gekennzeichnet,**
daß für die stromführenden Versorgungselemente (10, 12, 16) elektrisch gut leitende Elemente, vorzugsweise Kupferleiter, verwendet sind.

11. Kabel nach einem der vorhergehenden Ansprüche,
**dadurch gekennzeichnet,**
daß die lokalen Versorgungseinheiten (6) für den Anschluß der stromführenden Elemente (9, 10, 12, 16) aus Nuklearzellen gebildet sind.

12. Kabel nach einem der Ansprüche 1 bis 10,
**dadurch gekennzeichnet,**
daß die lokalen Versorgungseinheiten für den Anschluß der stromführenden Versorgungselemente (9, 10, 12, 16) aus chemisch wirksamen Energieelementen, vorzugsweise aus Wasserstoffbrennstoffzellen gebildet sind.

13. Kabel nach einem der Ansprüche 1 bis 10,
**dadurch gekennzeichnet,**
daß die lokalen Versorgungseinheiten (6) für den Anschluß der stromführenden Versorgungselemente (9, 10, 12, 16) aus Fotozellen gebildet sind, die in Behältern, vorzugsweise schwimmfähigen Bojen, angeordnet sind und über Versorgungselemente mit einem Regenerator (5) verbunden sind.

14. Kabel nach einem der Ansprüche 1 bis 10,
**dadurch gekennzeichnet,**
daß die Versorgungseinheiten (6) für die Bereitstellung der elektrischen Energie aus durch Wasserströmung oder Druckschwankungen beeinflußbaren Elementen gebildet sind.

15. Verfahren zur elektrischen Versorgung von Regeneratoren oder ähnlichen Geräten bei Unterwassereinsatz mit einem Kabel nach einem der vorhergehenden Ansprüche,
**dadurch gekennzeichnet,**
daß mindestens ein stromführendes Versorgungselement (9, 10, 12) das in der Zusatzbewehrung (2) des Kabels (1) angeordnet ist, an das elektrische Fernspeisesystem angeschlossen wird.

16. Verfahren nach Anspruch 15,
**dadurch gekennzeichnet,**
daß ein zweites stromführendes Versorgungselement (9), das ebenfalls innerhalb der Zusatzbewehrung (2) angeordnet ist, angeschlossen wird.

17. Verfahren nach Anspruch 15,
**dadurch gekennzeichnet,**

daß ein stromführendes Versorgungselement (16) im geschützt eingelagerten Kabel (1) angeschlossen wird.

FIG 1

FIG 2

FIG 3